(19) Europäisches Patentamt / European Patent Office / Office européen des brevets

(11) **EP 1 853 941 B1**

(12) **EUROPÄISCHE PATENTSCHRIFT**

(45) Veröffentlichungstag und Bekanntmachung des Hinweises auf die Patenterteilung:
**08.05.2019 Patentblatt 2019/19**

(21) Anmeldenummer: **06707657.0**

(22) Anmeldetag: **03.01.2006**

(51) Int Cl.:
***G01V 3/10*** *(2006.01)*

(86) Internationale Anmeldenummer:
**PCT/EP2006/050007**

(87) Internationale Veröffentlichungsnummer:
**WO 2006/087246 (24.08.2006 Gazette 2006/34)**

(54) **VERFAHREN ZUR DETEKTION VON IN EINEM MEDIUM EINGESCHLOSSENEN OBJEKTEN SOWIE MESSGERÄT ZUR DURCHFÜHRUNG DES VERFAHRENS**

METHOD FOR THE DETECTION OF OBJECTS ENCLOSED IN A MEDIUM, AND MEASURING APPARATUS FOR CARRYING OUT SAID METHOD

PROCEDE DE DETECTION D'OBJETS RENFERMES DANS UN MILIEU ET DISPOSITIF DE MESURE DESTINE A LA MISE EN OEUVRE DE CE PROCEDE

(84) Benannte Vertragsstaaten:
**DE GB**

(30) Priorität: **21.02.2005 DE 102005007803**

(43) Veröffentlichungstag der Anmeldung:
**14.11.2007 Patentblatt 2007/46**

(73) Patentinhaber: **ROBERT BOSCH GMBH**
**70442 Stuttgart (DE)**

(72) Erfinder:
• **SKULTETY-BETZ, Uwe**
**70771 Leinfelden-echterdingen (DE)**
• **HAASE, Bjoern**
**70182 Stuttgart (DE)**
• **RENZ, Kai**
**70771 Leinfelden-echterdingen (DE)**
• **KRAPF, Reiner**
**72770 Reutlingen (DE)**

(56) Entgegenhaltungen:
**EP-A- 0 509 408 US-A- 3 609 522**
**US-A- 5 729 143**

EP 1 853 941 B1

**Beschreibung**

Die Erfindung betrifft ein Verfahren zur Detektion von in einem Medium eingeschlossenen Objekten nach dem Oberbegriff des Anspruchs 1 sowie ein Messgerät nach dem Oberbegriff des Anspruchs 7.

Stand der Technik

Zur Detektion von in einem Medium, wie bspw. einer Wand, einer Decke oder einem Boden eingeschlossenen Objekten, wie bspw. elektrischen Leitungen, Wasserleitungen, Rohren, Metallständern oder auch Holzbalken, werden seit längerer Zeit Ortungsgeräte eingesetzt. Dabei finden unter anderem induktive Geräte, d.h. Geräte, die ein Magnetfeld erzeugen, welches durch die in einem Medium eingeschlossenen, metallischen Gegenstände gestört wird, Verwendung. Neben diesen induktiven Geräten werden des weiteren kapazitive Geräte, Netzspannungsdetektoren sowie Hochfrequenzdetektoren verwendet.

Ein speziell bei induktiven und kapazitiven Ortungsgeräten auftretendes Problem stellt die trotz einer Kalibrierung des Messgerätes vorhandene, enorme Dynamik der verwendeten Sensoren und die damit einhergehende Variation in der Signalstärke des detektieren Messsignals dar. Um mit Metallortungsgeräten möglichst viele metallische Objekte unterschiedlicher Größe und Einlagerungstiefe, d.h. Entfernung des eingeschlossenen Objektes vom Messgerät, detektieren zu können, muss ein hoher Dynamikbereich abgedeckt werden. Neben der Tiefe der zu vermessenden Objekte in dem einschließenden Medium ergibt sich der große Dynamikbereich des Messsignals derartiger Sensoren auch aus den charakteristischen Eigenschaften des jeweils zu detektierenden Materials. So erzeugt bspw. ein tief in einer Wand befindliches Kupferkabel ein um mehrere Größenordnungen kleineres Sensor- bzw. Messsignal, als bspw. ein in 2 cm Tiefe verlegtes Eisenrohr.

Bei bekannten Ortungsgeräten, insbesondere Metallortungsgeräten gibt es daher häufig die Möglichkeit, die Empfindlichkeit des Sensors manuell, d.h. von einem Anwender ausgehend, nachregeln zu können. Hierzu werden bspw. Drehpotentiometer mit einem entsprechenden, am Gehäuse des Ortungsgerätes ausgebildeten Drehrad genutzt.

Bei anderen Ortungsgeräten kann die Empfindlichkeit des Sensors und somit die Stärke des detektieren Messsignals durch eine jeweilige Neukalibrierung auf die vorhandenen Objekte eingeregelt werden.

Allerdings ist es mit derartigen Geräten schwierig, unterschiedlich große Objekte, wie bspw. Kupferkabel und Stahlträger, mit einer Einstellung des Gerätes zu detektieren, bzw. genau zu lokalisieren. Eine zu große Signalstärke des detektierten Messsignals führt bspw. zu einer Übersteuerung des Empfangsverstärkers eines derartigen Sensors und ist deshalb so kritisch, weil in diesem Fall über einen weiten Bereich keine Signalzu- bzw. Abnahme mehr erkannt werden kann, die für eine genaue Lokalisierung eines eingeschlossenen Objektes zwingend notwendig ist. Ein eingeschlossenes Objekt liefert in einem solchen Fall über einen weiten lateralen Bereich Maximalausschlag des Messgerätes, sodass die genaue Lage des Objektes auch weiterhin dem Anwender unklar bleibt. Darüber hinaus können bspw. eng beieinander liegende Objekte nicht mehr als zwei getrennte Objekte erkannt werden.

Aus dem Stand der Technik sind mehrere Lösungsansätze bekannt, um Signale mit großer Dynamik zu erfassen. So ist beispielsweise der Einsatz der folgenden Methoden bekannt:

Verwendung eines AD-Konverters mit höherer Auflösung. Dieser verursacht jedoch hohe Bauelementekosten

Einsatz eines Verstärkers mit variablem Verstärkungsfaktor (so genannter VGA). Diese Verstärker sind typisch empfindlich gegen Temperaturdrift und teurer als Verstärker mit festem Verstärkungsfaktor.

Einsatz zusätzlicher Verstärkerstufen und Abgriff des Messsignals je nach Signalamplitude an Verschiedenen Verstärkerstufen.

Gemeinsam ist diesen genannten Lösungsansätzen, dass ihre Umsetzung in einem Metalldetektor zu erhöhtem Schaltungsaufwand führt bzw. zum Teil erhebliche Mehrkosten verursacht. Es kommen weitere technische Nachteile hinzu, welche damit zusammenhängen, dass die oben aufgeführten Alternativlösungen prinzipbedingt einer höheren Temperaturdrift unterworfen sind (insbesondere bei VGAs). Ebenso sind diese bekannten Lösungen auch bezüglich Bauelementestreuung und somit bezüglich der Streuungen innerhalb eines Fertigungsloses des Metalldetektors in der Großserienfertigung unvorteilhaft.

Aus der EP 0 509 408 A1 ist ein Metalldetektor mit akustischer Signalgabe bekannt, bei dem vorgesehen ist, ein Suchsignal bezüglich seiner Frequenz und/oder seiner Amplitude in Abhängigkeit von der Entfernung der Detektorsonde zu einem Suchobjekt zu modulieren.

Dazu wird die akustische Signalgabe, die aus dem sich ergebenden Suchsignal des Detektors abgeleitet wird, durch eine Art Tremolo-Effekt verfeinert. Dieser akustische Effekt kommt dadurch zustande, dass das detektierte Suchsignal unterhalb oder oberhalb von einem bestimmten Frequenzwert und/oder einem bestimmten Amplitudenpegel einer Modulation unterzogen wird und zwar in Abhängigkeit vom Abstand der Detektorsonde zum Suchobjekt.

Damit erreicht die Vorrichtung der EP 0 509 408 A1 eine Feinerkennung eines metallischen Suchobjektes. Diese Feinerkennung kann die zweite Stufe eines Erkennungsverfahrens darstellen, bei welchem die grobe Voruntersuchungsstufe die Erzeugung eines akustischen Signals mit einem vorgegebenen Frequenz- und/oder Amplitudenhub in Abhängigkeit vom Abstand der Detektorsonde zum Suchobjekt vorsieht. Die der Erfindung zugrunde liegende Aufgabe besteht nunmehr darin, ein Verfahren zur Detektion von in einem Medium eingeschlossenen Objekten anzugeben, welches eine möglichst genaue Lokalisierung der Objekte gewährleisten kann.

Die der Erfindung zugrunde liegende Aufgabe wird gelöst durch ein Verfahren zur Detektion von in einem Medium eingeschlossenen Objekten mit den Merkmalen des Anspruchs 1 bzw. durch ein Messgerät mit den Merkmalen des Anspruchs 7.

Vorteile der Erfindung

Bei dem erfindungsgemäßen Verfahren zur Detektion von in einem Medium eingeschlossenen Objekten wird über zumindest eine Sendespule und mindestens ein Empfangsleiterschleifensystem, welche induktiv miteinander gekoppelt sind, ein Messsignal generiert, das es ermöglicht, Informationen über die Lage des eingeschlossenen Objektes zu gewinnen. Dieses Signal ist beispielsweise einen im Empfangsleiterschleifensystem induzierte Spannung. Erfindugnsgemäß wird dabei in Abhängigkeit von der Signalstärke des detektierten Messsignals die Frequenz des Messsignals geändert. Der Erfindung liegt die Erkenntnis zugrunde, dass im Gegensatz zur Kompensation der Dynamik auf der Detektorseite eine Dynamikanpassung auf der Erregerseite wesentlich kostengünstiger gelingen kann. Die bei einem derartigen Verfahren genutzte Sendespule ist Teil eines Erregerschwingkreises, der ein Messsignal erzeugt und in ein zu untersuchendes Medium abstrahlt. Ein solcher Schwingkreis, der neben der Sendespule eine Kapazität aufweist, kann auf eine Frequenz hin optimiert werden. Wird nun die Frequenz des Messsignals geändert, so ist die Auslegung der Sendespule nebst zugehöriger Kapazität nicht mehr auf das aktuell verwendete Messsignal optimiert, sodass sowohl das ausgesendete Messsignal, als auch ein detektiertes Messsignal in ihrer Signalstärke reduziert sind. Dies wird bei dem erfindungsgemäßen Verfahren genutzt, um die Signalstärke des detektieren Messsignals in gewünschter Weise zu beeinflussen.

Auf diese Weise ist es möglich, den Dynamikbereich des erfindungsgemäßen Verfahrens an das aktuell zu lokalisierende Objekt bzw. die von diesem Objekt erzeugte Signalstärke anzupassen.

Durch die in den abhängigen Ansprüchen aufgeführten Merkmale sind vorteilhafte Weiterbildungen des erfindungsgemäßen Ortungsverfahrens möglich.

Erfindugnsgemäß wird das die Sendespule der Vorrichtung ansteuernde Signal mittelbar oder unmittelbar einem digitalen Frequenzgenerator mit Pulsweitenmodulation entnommen, wobei dessen Tastverhältnis in Abhängigkeit von der Signalstärke ($U_M$) des detektierten Messsignals entsprechend geändert wird.

In einem nicht-erfindugnsgemäßen Beispiel ist es auch möglich, die Frequenz ($f_M$) des Messsignals, d. h, das die Senedespule ansteuernde Signal mit Hilfe eines Digitalsignals, insbesondere eines Rechtecksignals vorzugeben und die Änderung der Frequenz durch eine Umkonfiguration einer digitalen Steuereinheit, insbesondere eines Mikroprozessors durchzuführen. Hierzu kann in vorteilhafter Weise ein geeignetes Steuerprogramm verwendet werden.

Bei dem erfindungsgemäßen Verfahren kann zumindest ein erster Schwellwert für das detektierte Messsignal vorgesehen sein, bei dessen Überschreiten die Frequenz des Messsignals geändert wird. Wird bspw. bei kleinen Objekten, die nur eine geringe Signalstärke des detektieren Messsignals erzeugen, mit möglichst hoher Empfindlichkeit gearbeitet, indem die Messfrequenz auf den Schwingkreis der Erregerspule und/oder auch auf den Empfangszweig optimiert ist, so wird bei großen Objekten, die eine entsprechend große Signalstärke erzeugen würden, mit einer geringeren Empfindlichkeit gearbeitet. Dazu wird bei Überschreiten eines Schwellwertes für die detektierte Signalstärke die Frequenz des Messsignals geändert. Aufgrund der geänderten Messfrequenz sind der Schwingkreis der Sendespule bzw. der Empfangszweig verstimmt, sodass die Stärke des Messsignals allein aufgrund dieses Effektes reduziert ist.

Das erfindungsgemäße Verfahren ermöglicht es somit, eine Änderung der Messempfindlichkeit lediglich durch eine Veränderung der Messfrequenz hervorzurufen. Dadurch verringert sich das Empfangssignal und Objekte, die sonst zu einer Übersteuerung des Empfangszweiges führen würden, d.h. bspw. zu einer Verstärkungssättigung des Empfangsverstärkers führen würden, liefern nunmehr Messsignale, die eine zuverlässige Ortsauflösung ermöglichen. Eine Übersteuerung bspw. des Empfangsverstärkers bei einem derartigen Ortungsverfahren ist deshalb so kritisch, weil in diesem Falle keine weitere Signalzu- bzw. Abnahme mehr detektiert werden kann und somit ein Messgerät über einen weiten Bereich bspw. maximale Signalstärke detektieren würde, sodass eine genaue Lokalisierung eines Objektes nicht möglich wäre.

Bei dem erfindungsgemäßen Verfahren wird in vorteilhafter Weise die Frequenz des Messsignals bei Überschreiten eines Schwellwerts für das detektierte Messsignal erhöht. Typische Werte für eine derartige Erhöhung liegen im Bereich zwischen 10 und 100 % der Frequenz des Messsignals. In einer besonders vorteilhaften Ausführungsform des erfindungsgemäßen Verfahrens wird die Frequenz des Messsignals bei Überschreiten eines ersten Schwellwertes für die Stärke des detektierten Messsignals um ca. 40 % erhöht.

In anderen Ausführungsformen ist es natürlich ebenso möglich, die Frequenz des Messsignals bei Überschreiten eines ersten Schwellwertes für die Signalstärke des Messsignals abzusenken.

Bei dem erfindungsgemäßen Verfahren ist vorgesehen, dass die Frequenz des Messsignals bei Unterschreiten eines zweiten Schwellwertes für die Stärke des detektierten Messsignals wiederum geändert wird. Insbesondere kann die Frequenz des Messsignals wieder auf einen ursprünglich verwendeten Wert abgesenkt werden, sobald die Signalstärke des detektierten Messsignals einen zweiten Schwellwert erreicht.

Neben den beschriebenen ersten und zweiten Schwellwerten können in analoger Weise gegebenenfalls noch weitere Schwellwerte bei dem erfindungsgemäßen Verfahren vorgesehen sein.

Auch kann es gegebenenfalls vorteilhaft sein, bei dem erfindungsgemäßen Verfahren die bereits einmal geänderte, d.h. erhöhte oder abgesenkte Messfrequenz, bei Erreichen eines Schwellwertes nochmals zu erhöhen oder abzusenken, um zu vermeiden, dass die Signalstärke zu groß bzw. zu klein wird.

In einer vorteilhaften Ausführungsform des erfindungsgemäßen Verfahrens wird die Frequenzänderung $\Delta f_M$ der Frequenz des Messsignals in diskreten Frequenzschritten durchgeführt. Dabei kann es bspw. vorgesehen sein, das Messsignal zwischen zwei, drei oder auch mehreren diskreten Frequenzen hin- und herzuschalten.

Prinzipiell kann eine solche Frequenzänderung natürlich auch in kontinuierlicher Weise erfolgen.

Das erfindungsgemäße Verfahren ermöglicht die Realisierung eines Messgerätes, insbesondere eines handgehaltenen Ortungsgerätes, das die Detektion von in einem Medium eingeschlossenen Objekten über einen weiten Dynamikbereich mit hoher lokaler Genauigkeit ermöglicht. In vorteilhafter Weise kann bei einem derartigen Messgerät vorgesehen sein, dass die Veränderung der Messempfindlichkeit des Messgerätes aufgrund der Änderung der Messfrequenz für einen Anwender eines solchen Messgerätes unsichtbar, da automatisch durch das Gerät selbst gesteuert, vorgenommen wird. Detektiert das Messgerät eine Signalstärke, die über einem zuvor bestimmten Schwellwert liegt, so kann eine Steuerroutine des Messgerätes automatisch auf eine veränderte Messfrequenz, bspw. eine erhöhte Messfrequenz umschalten.

In alternativen Ausführungsformen eines Messgerätes zur Durchführung des erfindungsgemäßen Verfahrens können jedoch auch Schaltungsmittel vorgesehen sein, die es einem Anwender ermöglichen, bei Überschreiten eines Schwellwertes für das detektierte Messsignal die Frequenz des Messsignals eigenhändig zu verändern, um damit eine Änderung der Messempfindlichkeit des Messgerätes hervorzurufen.

Das erfindungsgemäße Verfahren ermöglicht die Ortung von in einem Medium eingeschlossenen Objekten mit einer hohen lokalen Genauigkeit, da der Dynamikbereich des Messsystems auf einfache Weise an die Stärke des aktuellen Messsignals angepasst werden kann. Dies lässt sich in einem Messgerät in einfacher Weise ohne großen zusätzlichen schaltungstechnischen Aufwand realisieren. Die Veränderung des Dynamikbereichs mit Hilfe der Frequenzänderung ist insbesondere möglich, da bei höheren Frequenzen die magnetische Suszeptibilität der meisten magnetischen Werkstoffe rasch sinkt, sodass eine Anhebung der Arbeitsfrequenz eine Verringerung des empfangenen Messsignals bewirkt.

Andererseits führt bei nicht-ferromagnetischen Objekten, wie bspw. Kupfer, eine Erhöhung der Arbeitsfrequenz zwar zu einer höheren Detektionsgüte, da bei diesen Werkstoffen die Rückwirkung auf die Spulen der Sensoranordnung jedoch sowieso beträglich kleiner ist, führt dies in der praktischen Anwendung in den seltensten Fällen zu einer Überhöhung des Messsignals und somit gegebenenfalls zu einer Verstärkersättigung.

Weitere Vorteile des erfindungsgemäßen Verfahrens bzw. eines Messgerätes zur Durchführung eines solchen Verfahrens sind der nachfolgenden Beschreibung eines Ausführungsbeispiels sowie den zugehörigen Zeichnungen zu entnehmen.

Zeichnung

In der Zeichnung ist ein Ausführungsbeispiel für das erfindungsgemäße Verfahren dargestellt, das in der nachfolgenden Beschreibung näher erläutert werden soll.

Es zeigt:

Figur 1    eine typische Mess-Situation zur Ortung von einem in einem Medium eingeschlossenen Objekt in einer schematisierten Darstellung,

Figur 2a    eine schematisierte Darstellung des Verlaufs der detektierten Messsignals als Funktion des Ortes bei Verwendung des erfindungsgemäßen Verfahrens,

Figur 2b    die dem Verlauf des Messsignals aus Figur 2a zugrunde liegende Messsituation in schematischer Darstellung,

Figur 3    eine Detaildarstellung der elektrischen Schaltung zur Erzeugung und Auswertung von Messsignalen nach dem erfindungsgemäßen Verfahren,

Figur 4    eine perspektivische Darstellung eines möglichen Ausführungsbeispiels für ein erfindungsgemäßes Messgerät.

Beschreibung eines Ausführungsbeispiels

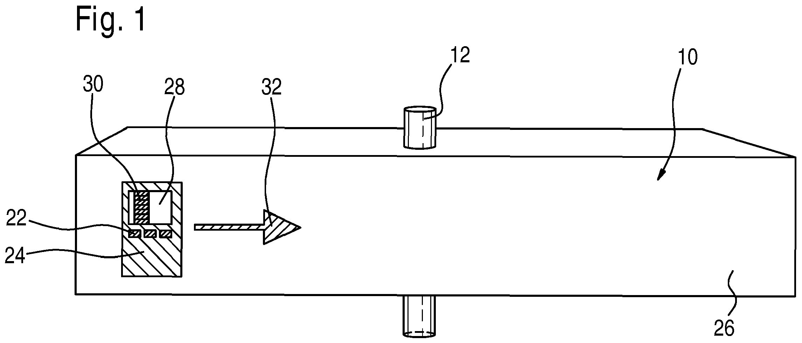

Figur 1 zeigt eine typische Mess-Situation zur Ortung von in einem Medium 10, bspw. einer Wand, einem Boden oder einer Decke eingeschlossenen Objekten. Ein Ortungsgerät 24 wird über die Oberfläche 26 eines zu untersuchenden Mediums 10 verschoben, um die Lage eines in dem Medium 10 eingeschlossenen Objektes 12 zu detektieren, d.h. zu lokalisieren. Bei einem solchen Objekt 12 kann es sich bspw. um eine elektrische Leitung, Rohre, bspw. Wasserrohre, Metallständer, oder auch andere Gegenstände handeln. Ein derartiges Ortungsgerät 24 weist insbesondere einen induktiven Sensor mit zumindest einer Sendespule sowie einem als Empfangseinheit dienenden Empfangsleiterschleifensystem auf. Neben einer entsprechenden Ansteuerelektronik, der zugehörigen Energieversorgung sowie einer Auswerteeinheit für das detektierte Messsignal weist ein derartiges Ortungsgerät 24 bspw. auch eine grafische Anzeige 28 auf, die eine Ausgabegröße wiedergibt, die mit der Stärke des detektieren Messsignals korreliert ist. Die Ausgabegröße kann bspw. in Form eines Balkendiagramms 30 dargestellt werden, wobei die Anzahl der beleuchteten Balken zwischen einem Minimalwert und einem Maximalwert ein Maß für die Stärke des Messsignals darstellen. Neben der in Figur 1 gezeigten Darstellung der Ausgabegröße mittels eines Balkendiagramms 30 sind auch andere Ausgabeformen, insbesondere weitere optische Darstellungen, möglich.

Ein solches Ortungsgerät 24 weist bspw. einen Kompensationssensor auf. Ein derartiger Sensor umfasst bspw. drei Spulen, wobei eine erste Sendespule an einem ersten Sender angeschlossen ist, eine gegebenenfalls vorhandene zweite Sendespule an einem zweiten Sender angeschlossen ist und ein als Empfangsspule dienendes Empfangsleiterschleifensystem an einem Empfänger angeschlossen ist. Die beiden Sendespulen werden von ihren Sendern mit Wechselströmen einer Frequenz $f_M$ sowie entgegengesetzter Phase gespeist. Dabei induziert die erste Sendespule in der Empfangsspule einen Fluss, der dem von der zweiten Sendespule in der Empfangsspule induzierten Fluss entgegengesetzt ist. Beide in der Empfangsspule induzierten Flüsse kompensieren sich somit gegenseitig, sodass der Empfänger keinerlei Empfangssignal in der Empfangsspule detektiert, falls sich kein externer metallischer Gegenstand in der Nähe einer solchen Spulenanordnung befindet. Der von den einzelnen Sendespulen in der Empfangsspule erregte Fluss $\Phi$ hängt von verschiedenen Größen, wie beispielsweise der Windungszahl und der Geometrie der Spulen sowie von Amplituden der in den beiden Sendespulen eingespeisten Ströme und ihrer gegenseitigen Phasenlage ab. Diese Größen sind bei derartigen Detektoren letztendlich so zu optimieren, dass bei Abwesenheit eines metallischen Gegenstandes in der Empfangsspule ein möglichst geringer Fluss $\Phi$ angeregt wird.

Alternativ ist es auch möglich, nur eine Sendespule zu verwenden und das Empfangswindungssystem derart im Raum zu positionieren, dass bei Abwesenheit metallischer Objekte in den Empfangsleiterstrukturen keine Spannung induziert wird.

Befindet sich nun ein metallischer Gegenstand in der Nähe einer solchen Empfangsgeometrie, so modifiziert dieser Gegenstand das von der Sendegeometrie erzeugte Feld, so dass ein resultierender Fluss in der Empfangsspule induziert wird, der in der Empfangsspule bzw. einem Empfangsleiterschleifensystem induzierte Fluss kann dann als Messspannung beispielsweise an der Spule oder nachgeschalteten Messverstärkern abgegriffen werden. Das detektierte Messsignal, beispielsweise die abgegriffene Messspannung $U_M$ ist umso größer, je näher der induktive Sensor dem eingeschlossenen Objekt kommt.

Nähert sich ein derartiges Ortungsgerät 24 einem eingeschlossenen Objekt 12, wie dies beispielsweise durch Verfahren in Richtung des Pfeils 32 gemäß der Darstellung in Figur 1 der Fall wäre, so steigt das detektierte Messsignal an.

Insbesondere bei Geräten des Standes der Technik kann es nun zu Mess-Situationen in der Nähe des eingeschlossenen Gegenstandes 12 kommen, bei denen über einen größeren Verfahrweg des Ortungsgerätes 24 im Bereich des zu detektierenden Objektes 12 das Messsignal derart stark ist, dass über den gesamten Bereich der Maximalausschlag der Ausgabegröße, beispielsweise der abgegriffenen Messspannung $U_M$ wiedergegeben wird. In diesem Fall ist eine exakte Ortung der Lage des eingeschlossenen Objektes 12 nicht möglich.

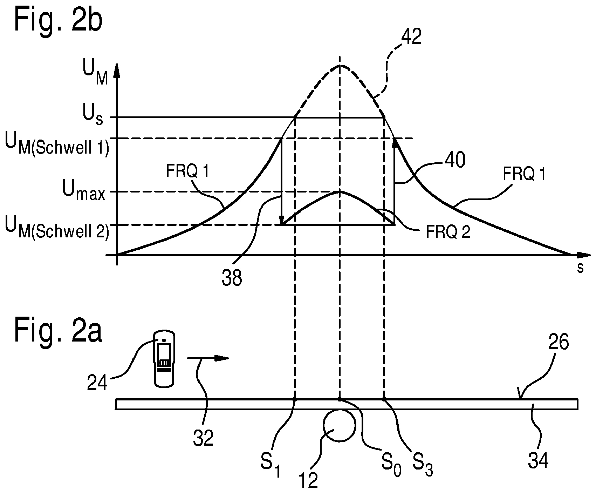

Figur 2 zeigt in einer schematischen Darstellung den Verlauf des detektierten Messsignals $U_M$ eines Ortungsgerätes bei Annäherung bzw. Entfernung von einem eingeschlossenen Objekt, falls dieses Ortungsgerät nach dem erfindungsgemäßen Verfahren arbeitet.

In Figur 2a ist nochmals die Mess-Situation dargestellt. Das Ortungsgerät 24 wird in Richtung des Pfeils 32 über die Oberfläche 26 beispielsweise einer Wand 34 verschoben. Hinter dieser Wand 34 verborgen befindet sich ein eingeschlossenes Objekt 12, beispielsweise ein Wasserrohr, an der Stelle $S_1$. Figur 2b zeigt den detektierten Signalverlauf des Messsignals $U_M$ als Funktion des Verschiebeweges s des Ortungsgerätes 24 über die Wand 34.

Bei dem Messsignal $U_M$ kann es sich beispielsweise um eine am Empfangswindungssystem des Sensors abgegriffene Messspannung handeln.

Ist das Ortungsgerät noch weit von einem eingeschlossenen Gegenstand entfernt, wie dies die Situation in Figur 2a wiedergibt, so ist das entsprechende Messsignal gering. In dieser Messsituation nutzt das erfindungsgemäße Verfahren eine erste Frequenz $f_{M1}$, auf die die Schwingkreise und Filter des Ortungsgerätes abgestimmt und optimiert worden sind. Diese Frequenz liegt typischerweise in einem Bereich zwischen 1 kHz und 10 kHz, wobei insbesondere eine Frequenz von 5 kHz als vorteilhaft angesehen werden kann. Bei Verwendung eines Messsignals dieser Frequenz $f_{M1}$ arbeitet das Messgerät somit mit höchstmöglicher Empfindlichkeit. Nähert sich das Ortungsgerät nun einem eingeschlossenen Objekt, d.h. wird das Ortungsgerät in der Darstellung nach Figur 2a in Richtung des Pfeils 32 verschoben, so steigt das Messsignal mit der Frequenz $f_{M1}$, wie in Figur 2b gezeigt, entsprechend stark an. Würde unverändert mit der gleichen Messfrequenz $f_{M1}$ weiter gemessen werden, so käme es im Beispiel nach Figur 2 an einer Position $S_1$, die unter Umständen noch weit entfernt sein kann von der eigentlichen Position $S_0$ des eingeschlossenen Gegenstandes, zur Signalsättigung in der Auswertungselektronik des Empfangssensors. So könnte beispielsweise ein der Empfangsspule nachgeschalteter Verstärker in die Verstärkungssättigung geraten. Würde bei dieser Konfiguration das Ortungsgerät 24 weiter in Richtung auf den eingeschlossenen Gegenstand 12 bewegt, so ergäbe sich aufgrund der Verstärkungssättigung kein weiterer Anstieg des Messsignals $U_M$ mehr, die Signalstärke des Messsignals bliebe auf einem Niveau $U_S$ konstant, wie dies in Figur 2b angedeutet ist. In einer derartigen Situation kann das Ortungsgerät über die Stelle $S_0$ des eingeschlossenen Objektes hinweg bewegt werden, ohne dass diese Stelle durch eine signifikante Signaländerung des Messsignals $U_M$ zu identifizieren wäre. Die gestrichelte Kurve 42 mit Ihrem Maximum an der Stelle $S_0$ des eingeschlossenen Objektes zeigt den Kurvenverlauf, falls es zu keiner Sättigung in der detektierten Signalstärke käme, wie dies beispielsweise der Fall wäre, wenn der Dynamikbereich des verwendeten Messverstärkers nicht eingeschränkt wäre.

Aufgrund des endlichen Dynamikbereichs bei der Verstärkung des detektierten Messsignals kommt es jedoch zu dem beschriebenen Sättigungsverhalten. Verdeutlicht ist dies in Figur 2b durch den Bereich konstanten Messsignals zwischen den Punkten $S_1$ und $S_3$. Erst wenn das Ortungsgerät 24 in Richtung des Pfeils 32 wieder hinreichend weit vom eingeschlossenen Objekt 12 entfernt ist, also in der Darstellung der Figur 2 eine Position $S_3$, erreicht und überfahren hat, ist das detektierte Messsignal $U_M$ wieder so gering, dass dieses nicht mehr zu einer Verstärkungssättigung führt, so dass wieder ein veränderliches Messsignal $U_M$ vorliegt, das mit zunehmendem Abstand von der Position $S_0$ des eingeschlossenen Objektes 12, wie in Figur 2b dargestellt, wiederum abnimmt.

Über einen endlichen Bereich zwischen den Punkten $S_1$ und $S_3$, der je nach Beschaffenheit des eingeschlossenen Objektes 12 bis zu mehreren Dezimetern betragen kann, würde mit einem herkömmlichen Ortungsgerät ein konstanter Signalpegel $U_S$ gemessen, der die genaue Lokalisierung des Ortes $S_1$ des eingeschlossenen Objektes 12 verhindern würde.

Bei dem erfindungsgemäßen Verfahren wird nunmehr das Messsignal $U_M$ bei Erreichen eines ersten Schwellwertes $U_{M (Schwell 1)}$ von der Frequenz $f_{M1}$ auf die Frequenz $f_{M2}$ umgeschaltet. Dabei liegt der Schwellwert $U_{M (Schwell 1)}$ unterhalb der Signalstärke $U_S$, die zu einer Verstärkungssättigung führen würde. Auf diese Weise kann verhindert werden, dass beispielsweise die Messverstärker des genutzten Ortungsgerätes übersteuert werden.

Da sowohl auf die Erreger- bzw. Sendeseite als auch auf die Empfangsseite auf die Frequenz $f_{M1}$ optimiert worden sind, führt eine Verstimmung der Frequenz $f_{M1}$ um einen Betrag $\Delta f$ auf die Frequenz $f_{M2}$ ($f_{M2} = f_{M1} + \Delta f$) zu einer Reduzierung der Signalstärke des detektierten Messsignals $U_M$. Bei Umschalten der Messfrequenz sinkt somit die detektierte Signalstärke, wie dies durch den Pfeil 38 in Figur 2b angedeutet ist. Die Frequenzänderung $\Delta f$ ist dabei derart gewählt, dass der durch das Messsignal $U_M$ bei der Frequenz $f_{M2}$ erzeugte Spannungspegel niedriger, und insbesondere deutlich unterhalb der Sättigungsgrenze $U_S$ des Verstärkersystems liegt. Hierzu kann die Arbeitsfrequenz beispielsweise um 40 - 50 % angehoben werden.

Wird ein Ortungsgerät unter Verwendung des erfindungsgemäßen Verfahrens über den Punkt $S_1$ hinausgehend näher an ein eingeschlossenes Objekt 12 herangebracht, so zeigt dieses einen Verlauf des Messsignals $U_M$, wie er in Figur 2b mit der Messkurve FRQ2 wiedergegeben ist. Das Messsignal steigt ausgehend von der Position $S_1$ bei Annäherung an die gesuchte Position $S_0$ des eingeschlossenen Objektes weiterhin an, erreicht in der Position $S_0$ ein Maximum und fällt bei Verfahren des Ortungsgerätes in Richtung auf den Punkt $S_3$ wieder ab. Auf diese Weise ist es möglich, die Position $S_0$ eines eingeschlossenen Objektes 12 über ein Maximum $U_{max}$ des detektierten Messsignals $U_M$ zu identifizieren.

Wird ein nach dem erfindungsgemäßen Verfahren arbeitendes Ortungsgerät über die Position $S_0$ eines eingeschlossenen Objektes 12 hinaus in Richtung des Pfeils 32 der Figur 2a verschoben, so wird bei Unterschreiten eines zweiten Schwellwertes $U_{M (Schwell 2)}$ für das aktuell detektierte Messsignal $U_M$ die Messfrequenz von $f_{M2}$ wiederum auf die ursprüngliche Messfrequenz $f_{M1}$ zurück gestellt. Da sowohl erreger- bzw. sendeseitig, als auch die Empfangsseite auf die Frequenz $f_{M1}$ optimiert ist, führt dies wiederum zu einem Signalanstieg, wie dies mit dem Pfeil 40 in Figur 2b angedeutet sein soll. Entfernt sich das Ortungsgerät 24 in Pfeilrichtung 32, ausgehend von der Position $S_3$ weiter vom eingeschlossenen Objekt 12, so ergibt sich ein kontinuierlicher Abfall in der Signalstärke, wie dies der Figur 2b zu entnehmen ist.

Bei dem erfindungsgemäßen Verfahren wird somit durch eine Verstimmung der Frequenz des Messsignals im Bereich um einen zu ortenden, eingeschlossenen Gegenstand herum die Empfindlichkeit des Messsystems herabgesetzt, um beispielsweise eine Verstärkungssättigung zu vermeiden. Typische Werte für eine derartige Verstimmung $\Delta f$ in der Frequenz des Messsignals können im Bereich von 10 bis 100 % liegen. Ein bevorzugter Wert für die Verstimmung der Frequenz des Messsignals liegt bei ca. 40-50 %. Dabei kann die Änderung $\Delta f$ des Messsignals sowohl positiv als auch negativ sein. In bevorzugten Ausführungsformen wird jedoch eine Erhöhung der Messfrequenz ($f_{M2} > f_{M1}$) genutzt. Da bei höheren Frequenzen die magnetische Suszeptibilität der meisten magnetischen Werkstoffe rasch sinkt, kann eine Anhebung der Arbeitsfrequenz eine Verringerung des empfangenen Messsignals bewirken. Bei nicht-ferromagnetischen Objekten, wie beispielsweise Kupfer, führt eine Erhöhung der Arbeitsfrequenz zwar zu einer höheren Detektionsgüte, da bei diesen Werkstoffen die Rückwirkung auf die Spulen der Sensoranordnung jedoch sowieso beträglich klein sind, führt dies in der praktischen Verwendung in den seltensten Fällen zu einer Überhöhung des Messsignals und somit zu einer erwünschten Verstärkungssättigung.

Für die Änderung der Frequenz des Messsignals sind verschiedene, prinzipiell bekannte Verfahren einsetzbar. Es kann beispielsweise zwischen zwei getrennten Frequenzen hin und hergeschaltet werden bzw. auch eine kontinuierliche Verstimmung der Arbeitsfrequenz vorgenommen werden. Als Messfrequenz im Sinne dieser Erfindung ist nicht nur eine einzelne diskrete Frequenz anzusehen, sondern auch beispielsweise das Intensitätsmaximum eines endlich breiten Frequenzbandes. Somit kann beispielsweise die Arbeitsfrequenz auch über ein Frequenzfilter, welches über der Bandbreite eines endlich breiten Frequenzspektrums verschoben wird, kontinuierlich oder aber auch diskret verändert werden. Ein im Erreger- bzw. Sendeteil angeordneter, der Erregerspule zugeordneter Schwingkreis, oder aber auch der Empfangszweig, kann bei Verwendung eines Filters, beispielsweise eines aktiven Filters, durch Frequenzänderung verstimmt werden. Dadurch verringert sich in beschriebener Weise das Empfangssignal, so dass Objekte, deren Signalstärke des Messsignals ansonsten beispielsweise zu einer Verstärkungssättigung mit dem beschriebenen Nachteilen führen würde, über das lokale Maximum des detektierten Messsignals noch genau lokalisiert werden können.

Verursacht ein eingeschlossenes Objekt bei der bereits geänderten Frequenz $f_{M2}$ wiederum einen so hohen Signalpegel, dass das detektierte Messsignal $U_M$ sich wiederum der kritischen Grenze $U_S$ der Sättigung nähert, kann bei einem Schwellwert, beispielsweise wiederum der Schwellwert $U_{M (Schwell 1)}$ sein kann, eine weitere, beispielsweise ebenfalls höhere Frequenz, umgeschaltet werden. Die Anzahl der verwendeten Frequenzen für das detektierte Messsignal sowie deren relative Größe zueinander, sind prinzipiell nicht begrenzt und können je nach Messaufgabe optimiert werden.

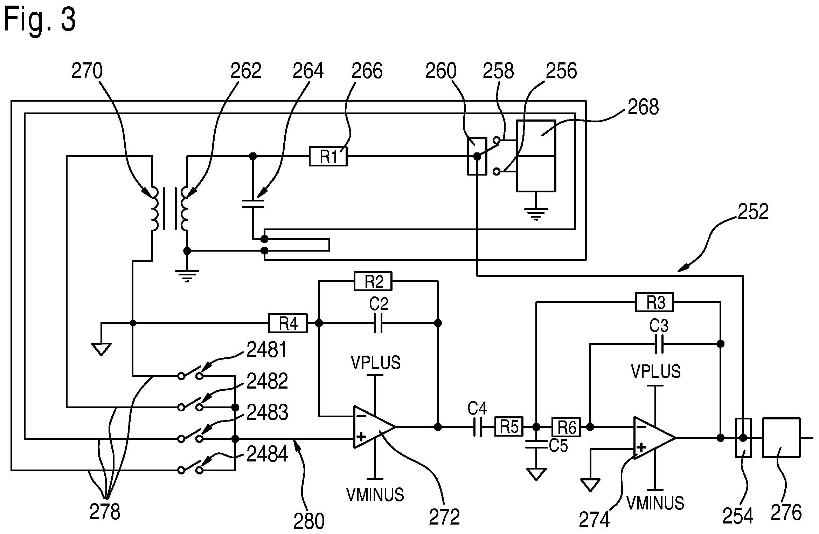

Figur 3 zeigt eine Detaildarstellung einer erfindungsgemäßen Schaltung zur Generierung, Auswertung und Aufbereitung der Signalspannungen, welche in Summe in den einzelnen Empfangswindungen des erfindungsgemäßen Sensors induziert werden.

Die Induktivität 262 in Figur 3 bezeichnet dabei beispielsweise die konventionell aus Draht gewickelte Erregerspule eines nach dem erfindungsgemäßen Verfahren arbeitenden Sensor für ein Ortungsgerät. Die Induktivität 262, welche mit der Kapazität 264 einen Schwingkreis bildet, ist über einen Widerstand 266 über Schaltungsmittel 260 mit einer Spannungsquelle 268 verbunden, die es beispielsweise über den Einsatz eines Rechteckgenerators ermöglicht, eine Messspannung unterschiedlicher Frequenz $f_M$ zu generieren.

In der Darstellung der Figur 3 sind diese Schaltungsmittel 260 als ein diskreter Schalter zwischen zwei Stellungen 256, 258 dargestellt, die jeweils eine Messspannung unterschiedlicher Frequenz symbolisieren sollen. Diese Schaltmittel können jedoch auch beispielsweise ein aktives oder passives Filterelement sein, die die entsprechende Arbeitsfrequenz aus einem breiteren Frequenzspektrum isolieren. Insofern ist der Begriff Schaltungsmittel weder auf einen Schalter, noch auf die diskrete Umschaltung zwischen einzelnen Frequenzen beschränkt. Praktisch bietet sich für die Erzeugung des Erregersignals beispielsweise der Einsatz eines Rechteckgenerators an. Aus dem Frequenzspektrum dieses Rechteckgenerators können mit Hilfe eines Erregerschwingkreises die höheren Frequenzen effizient herausgefiltert werden, so dass für die generierte Signalamplitude ausschließlich die Amplitude des Rechteckgenerators bei der Grundfrequenz verbleibt. Für einen solchen Rechteckgenerator stellen beispielsweise Microcontroller fertige Hardwareblöcke, so genannte Timer, bereit.

Eine Veränderung der Arbeitsfrequenz dieser Rechteckgeneratoren ist in einem nicht-erfindungsgemäßen Beispiel durch einfache Umprogrammierung dieser Timerblöcke möglich und verursacht somit für das Erzeugnis keine Bauelementekosten.

Übliche Timerblöcke in Microcontrollern bieten alternativ auch die Möglichkeit das so genannte "Tastverhältnis" des Rechteckausgangs zu variieren, d.h. das Verhältnis von Einschalt- zu Ausschaltzeit zu modifizieren. Erfindungsgemäß ist es somit möglich gleitend von einem symmetrischen Rechteck (Einschalt- und Ausschaltzeit jeweils gleich lang) zu einem mehr und mehr pulsförmigen Signal überzugehen (z.B. nur kurzes Einschalten und längeres Ausschalten), wobei die Periodendauer eines Ein-Aus-Zyklus konstant gehalten werden kann, so genannter PWM-Modus (Puls-Weiten-Modulation). Gibt man ein solches pulsweitenmoduliertes Signal bei konstanter Frequenz auf einen abgestimmten Schwingkreis, so kann mit Hilfe des Tastverhältnisses die Amplitude des Erregerstroms in der Erregerspule modifiziert werden, da sich mit zunehmend kürzeren Pulsen die Fourierkomponente bei der Grundfrequenz verringert werden. Allein diese jedoch ist bei einem auf die Grundfrequenz abgestimmten Erregerschwingkreis für die in der Spule fließenden Strom maßgeblich.

Im Vergleich zu einer Amplitudenänderung durch eine Frequenzmodifikation muss bei Veränderung des Tastverhältnisses allerdings in Kauf genommen werden, dass sich das Verhältnis zwischen Grundmode und den Oberwellen der Erregerfrequenz verschiebt. Dies kann bei digitaler Weiterverarbeitung der Empfängersignale aufgrund der relvanten Nyquist-Spiegelfrequenzen bei einer Unterabtastung zu Problemen führen. Dieses Problem tritt bei Variation der Frequenz in dieser Form nicht auf.

Alternativ ist es in einem nicht-erfindungsgemäßen Beispiel ebenso denkbar, eine Frequenzumschaltung mittels geeigneter Hardware-Schaltmittel zu realisieren. Auch das ist kostengünstig möglich. Bei Verwendung eines digital generierten Rechtecksignals kommt außerdem zum Tragen, dass die Frequenzveränderung sehr definiert ist, da sie nur in diskreten Stufen möglich ist. Sie ist insbesondere nicht einer Temperaturdrift unterworfen, beziehungsweise driftet die Frequenz nur in dem Maße wie die Frequenz des Micocontrollertaktes driftet. Diese kann jedoch bei Verwendung eines keramischen Resonators oder Quarzes sehr temperaturstabil gehalten werden.

Alternativ zur Verwendung eines Digitalsignals kann auch mit Hilfe eines Digital-Analog-Konverters ein Signal einer anderen Form generiert werden.

Für den im Erregerkreis wirksamen Strom führt eine Veränderung der Erregerfrequenz dazu, dass sich die innerhalb der Erregerspule fließenden Ströme erheblich reduzieren, sobald von der Resonanzfrequenz abgewichen wird und somit das im Empfängerschaltkreis abgreifbare Messsignal in der Amplitude drastisch sinkt. Realisiert man den Empfängerschaltkreis ebenfalls mit einer ausgeprägten Frequenzcharakteristik (beispielsweise als Bandpass), so reduziert sich die Amplitude am Verstärkerausgang des Empfängers durch diese Frequenzcharakteristik potentiell noch weiter.

Die Schaltungsmittel 260 sind beispielsweise durch eine entsprechende elektrische Verbindungsleitung 252 mit einem Steuermittel 254 verbunden, welches wiederum entsprechend einem detektierten Signalpegel die Schaltungsmittel 260 stellt. Als Eingangssignal für die Steuermittel 254 mag beispielsweise der Signalpegel ausgangs eines Messverstärkers dienen, wie dies in eher symbolischer Weise in Figur 3 dargestellt ist.

Die Induktivität 270 bezeichnet in Figur 3 das Empfangsleiterschleifensystem, welches zur Detektion des Messsignals dient. An diesem Empfangsleiterschleifensystem wird das detektierte Messsignal in Form einer induzierten Spannung abgegriffen. Die Auswerteschaltung besteht im Ausführungsbeispiel der Figur 3 u.a. aus einem zweistufigen Verstärker mit zwei Operationsverstärkern 272 bzw. 274, an deren Ausgang beispielsweise ein Analog-Digital-Converter (ADC) 276 angeschlossen sein kann. Die erste, besonders rauscharm ausgelegte Verstärkerstufe 272 verstärkt das Messsignal zunächst, welches anschließend in einer zweiten Stufe 274 mit Bandpasscharakteristik aufbereitet wird. So kann beispielsweise die zweite Verstärkerstufe sicherstellen, dass höhere Harmonische des Erregerfeldes aus dem Messsignal herausgefiltert werden können.

Vor der ersten Verstärkerstufe 272 finden sich eine Reihe von Schaltern 2481 bis 2484, welche verschiedene Eingangssignale 278 auf den Eingang 280 der Verstärkerstufe 272 aufschalten können. So kann beispielsweise im Messbetrieb des erfindungsgemäßen Sensor durch Schließen eines Schalters 2482 die in der Detektorspule 270 induzierte Spannung auf den Eingang des der Verstärkerstufe 272 aufgeschaltet werden. Die weiteren Schaltungselemente ermöglichen die Aufschaltung von Referenz- und Kontrollsignalen und ermöglichen somit eine Kalibrierung des Messsystems.

In vorteilhafter Weise ist für den erfindungsgemäßen Sensor ein Auswerteverfahren mit einer digitalen Rauschunterdrückung realisiert. Bei einer derartigen Filterung wird das Messsignal am Ausgang des Messverstärkers zunächst mittels eines Analog-Digital-Wandlers (ADC, 276 in Figur 3) synchron digitalisiert und mit einer nachgeschalteten digitalen Schaltung oder einem Mikroprozessor digital weiterverarbeitet. Zweckmäßigerweise generiert dieser digitale Schaltungsteil auch die Treiberspannung, welche die Erreger- bzw. Sendespule ansteuert. Besonders zweckmäßig ist es, das Messsignal mit einer vielfachen Frequenz (bspw. 10 kHz) des Erregermagnetfeldes (bspw. 5 kHz) zu digitalisieren. Es ist dann möglich, die am Ausgang der Verstärkerstufe im Empfangszweig anliegende Spannung phasensynchron mit der Erregerspannung zu digitalisieren und auf diese Weise rechnerisch eine digitale Rauschfilterung zu erzielen. Auf diese Weise sind effektive Rauschbandbreiten in der Größenordnung von wenigen Hertz ohne zusätzliche hohe Kosten und ohne großen Aufwand möglich.

Ein derart ausgestalteter, erfindungsgemäßer Sensor kann in vorteilhafter Weise in ein Messgerät integriert werden. Dabei kann ein solches Messgerät insbesondere als ein handgehaltenes Metallortungsgerät ausgebildet sein oder aber die Metallortungsfähigkeit gemäß dem erfindungsgemäße Verfahren als eine Zusatzfunktion beinhalten.

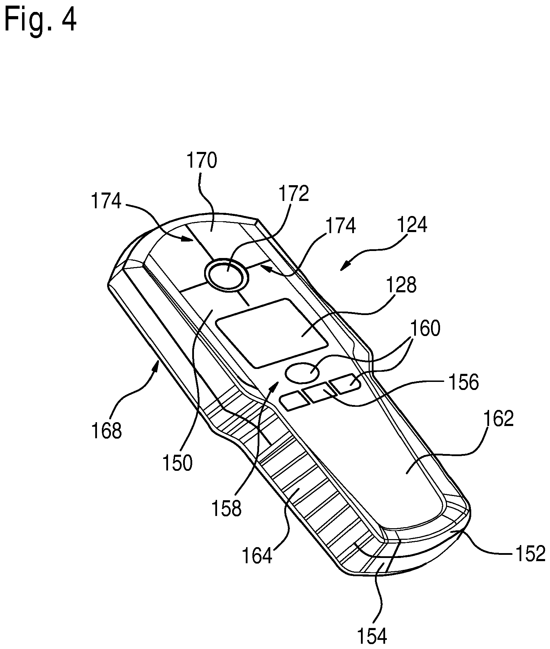

Figur 4 zeigt ein mögliches Ausführungsbeispiel eines derartigen Messgerätes.

Figur 4 zeigt ein Ausführungsbeispiel eines erfindungemäßen Messgerätes 124 in einer perspektivischen Übersichtsdarstellung. Das Messgerät besitzt ein Gehäuse 150, das aus einer oberen und einer unteren Halbschale 152 bzw. 154 gebildet ist. Im Inneren des Gehäuses ist zumindest ein Sensor mit einer Spulenanordnung zur Metalldetektion vorgesehen. Darüber hinaus weist das Innere des Messgerätes 124 eine Signalerzeugungs- und Auswerteelektronik, sowie eine Energieversorgung, bspw. über Batterien oder Akkus, auf. Das Messgerät gemäß Figur 4 besitzt darüber hinaus eine Anzeige 128 zur Ausgabe eines mit dem Messsignal korrelierten Ausgabesignals. Über die Anzeige 128, bspw. eine segmentierte Balkenanzeige oder aber auch eine graphische Anzeige unter Verwendung eines LCDs, ist es möglich, die Stärke des detektierten Messsignals darzustellen.

Des Weiteren besitzt das erfindungsgemäße Messgerät ein Bedienfeld 158 mit einer Reihe von Bedienelementen 160, die es ermöglichen, das Gerät bspw. ein- bzw. auszuschalten, sowie gegebenenfalls einen Messvorgang bzw. einen Kalibrierungsvorgang zu starten. Über ein Bedienelement 156 kann es einem Anwender beispielsweise ermöglicht werden, die Frequenz des Messsignal zu variieren. Darüber hinaus kann auch vorgesehen sein, dass diese Variation des Messfrequenz vom Gerät automatisch vorgenommen wird und insbesondere einem Anwender nicht zugänglich ist.

Im Bereich unterhalb des Bedienfeldes 158 weist das Messgerät gemäß Figur 4 einen Bereich 162 auf, der in seiner Form und Materialgestaltung als Handgriff 164 zur Führung des erfindungsgemäßen Messgerätes ausgestaltet ist. Mittels dieses Handgriffs 164 wird das Messgerät mit seiner, dem Betrachter der Figur 4 abgekehrten Unterseite über eine Oberfläche eines zu untersuchenden Gegenstandes bzw. eines Mediums, wie bspw. der Oberfläche 26 einer Wand 10 gemäß der schematischen Darstellung in Figur 1, geführt.

Auf der dem Handgriff 164 entgegensetzten Seite 170 des Messgerätes 124 weist dieses eine das Gehäuse durchdringende Öffnung 172 auf. Die Öffnung 172 ist konzentrisch zumindest zu dem Empfangsleiterschleifensystem 134 des Sensors angeordnet. Auf diese Weise entspricht der Ort der Öffnung 172 im Messgerät, dem Zentrum des Ortungssensors, sodass dem Anwender eines derartigen Gerätes damit auch gleichzeitig die genaue Lage eine evtl. detektierten Gegenstandes angezeigt wird. Darüber hinaus weist das Messgerät zusätzlich auf seiner Oberseite Markierungslinien 174 auf, über die das genaue Zentrum der Öffnung 172 und somit die Lage eines eingeschlossenen Gegenstandes vom Anwender lokalisiert werden kann.

Neben einem rein induktiven Messgerät, kann der erfindungsgemäße Verfahren auch für einen Zusatzsensor in Messgeräten verwendet werden, die darüber hinaus auch weitere Meßmethoden verwenden. So ist es möglich, das erfindungsgemäße Verfahren bzw. einen derartigen Sensor bspw. auch als Zusatzdiagnostik in einem Radarortungsgerät oder aber auch in einem Infrarotortungsgerät einzusetzen.

Darüber hinaus ist es auch möglich und vorteilhaft, einen Sensor nach dem erfindungsgemäßen Verfahren direkt oder als Anbauteil in eine Werkzeugmaschine, bspw. in ein Bohrwerkzeug zu integrieren, um einen Anwender ein sicheres Arbeiten mit dieser Maschine zu ermöglichen.

Das erfindungsgemäße Verfahren bzw. ein nach diesem Verfahren arbeitendes Messgerät ist nicht auf das in den Figuren dargestellte Ausführungsbeispiel beschränkt.

Insbesondere ist das erfindungsgemäße Verfahren nicht beschränkt auf die Verwendung lediglich einer Sendespule bzw. eines Empfangsleiterschleifensystems. Mehrfachsysteme sind ebenso möglich.

Das erfindungsgemäße Verfahren ermöglicht eine automatische Anpassung des Dynamikbereichs eines Ortungssensors an das momentan zu lokalisierende Objekt. Kleine Objekte, bzw. Objekte, die eine geringe Signalstärke erzeugen, werden danach mit der maximal möglichen Empfindlichkeit untersucht. Große Objekte, bzw. Objekte mit einer entsprechend erhöhten Signalstärke werden automatisch mit einer geringeren Empfindlichkeit vermessen. Dies ermöglicht eine genaue Lokalisierung für ein breites Spektrum von unterschiedlichen Objekten bzw. unterschiedlichen Verbautiefen. Dies kann insbesondere automatisch, d.h. durch geräteinterne Steuermittel durchgeführt werden. In alternativen Ausführungsformen ist es jedoch auch möglich, die Schaltungsmittel zur Änderung der Frequenz des Messsignals einem Anwender zugänglich zu machen, indem diese bspw. durch entsprechende Bedienelemente im oder am Gehäuse eines entsprechenden Ortungsgerätes betätigbar sind, wie dies durch das Bedienelement 22 in Figur 1 angedeutet sein soll.

Bei dem erfindungsgemäßen Verfahren wird die Veränderung der Messempfindlichkeit durch eine Veränderung der Messfrequenz hervorgerufen. Daher ist für dessen Realisierung kein großer, zusätzlicher schaltungstechnischer Aufwand vonnöten.

**Patentansprüche**

1. Verfahren zur Detektion von in einem Medium (10) eingeschlossenen Objekten (12), bei dem über zumindest eine Sendespule (14) und mindestens ein Empfangsleiterschleifensystem (16), welche induktiv miteinander gekoppelt sind, ein Messsignal (18) generiert wird, welches die Gewinnung von Informationen über die Lage des eingeschlossenen Objektes (12) ermöglicht, wobei in Abhängigkeit von der Signalstärke $U_M$ des detektierten Messsignals (18) die Frequenz $f_M$ des Messsignals geändert wird, **dadurch gekennzeichnet, dass** das die Sendespule (14) ansteuernde Signal mittelbar oder unmittelbar einem digitalen Frequenzgenerator mit Pulsweitenmodulation entnommen wird, dessen Tastverhältnis in Abhängigkeit von der Signalstärke $U_M$ des detektierten Messsignals (18) geändert wird.

2. Verfahren nach Anspruch 1, **dadurch gekennzeichnet, dass** zumindest ein erster Schwellwert $U_M$ (Schwell 1) für das detektierte Messsignal $U_M$ (Ist) vorgesehen ist, bei dessen Überschreiten, die Frequenz $f_M$ des Messsignals $U_M$ (Ist) geändert wird.

3. Verfahren nach Anspruch 2, **dadurch gekennzeichnet, dass** zumindest ein zweiter Schwellwert $U_M$ (Schwell 2) für das detektierte Messsignal $U_M$ (Ist) vorgesehen ist, bei dessen Unterschreiten, die Frequenz $f_M$ des Messsignals $U_M$ (Ist) geändert wird.

4. Verfahren nach Anspruch 2 oder 3, **dadurch gekennzeichnet, dass** die Frequenzänderung $\Delta f_M$ der Frequenz $f_M$ des Messsignals $U_M$ (Ist) in diskreten Schritten erfolgt.

5. Verfahren nach Anspruch 2 oder 3, **dadurch gekennzeichnet, dass** die Frequenz $f_{M1}$ des Messsignals bei Überschreiten des ersten Schwellwerts $U_M$ (Schwell1) erhöht wird $f_{M2} = f_{M1} + \Delta f_M$.

6. Verfahren nach Anspruch 3 oder 5, **dadurch gekennzeichnet, dass** die Frequenz $f_{M2}$ des Messsignals bei Unterschreiten des zweiten Schwellwerts $U_M$ (Schwell2) gesenkt wird $f_{M1} = f_{M2} - \Delta f_M$.

7. Messgerät, insbesondere ein handhaltbares Ortungsgerät (24,124), zur Durchführung des Verfahrens nach einem der Ansprüche 1 bis 6, bei dem über zumindest eine Sendespule (14) und mindestens ein Empfangsleiterschleifensystem (16), welche induktiv miteinander gekoppelt sind, ein Messsignal (18) generierbar ist, welches die Gewinnung von Informationen über die Lage des eingeschlossenen Objektes (12) ermöglicht, wobei das Messgerät (24,124) über Schaltungsmittel (260) verfügt, die es ermöglichen die Frequenz $f_M$ des Messsignals $U_M$ (Ist) zu ändern, **gekennzeichnet durch** einen digitalen Frequenzgenerator mit Pulsweitenmodulation, der dazu eingerichtet ist, mittelbar oder unmittelbar ein die Sendespule (14) ansteuerndes Signal zu erzeugen, und dessen Tastverhältnis in Abhängigkeit von der Signalstärke $U_M$ des detektierten Messsignals (18) änderbar ist.

8.  Messgerät nach Anspruch 7, **dadurch gekennzeichnet, dass** das Messgerät (24,124) über Steuermittel (254) verfügt, die die Frequenz $f_M$ des Messsignals $U_M$ (Ist) ändern, wenn die Signalstärke des Messsignals (18) einen Schwellwert ($U_M$(Schwell1),$U_M$ (Schwell2)) über- oder untersteigt.

9.  Messgerät nach Anspruch 7, **dadurch gekennzeichnet, dass** zumindest ein Bedienelement (156) vorhanden ist, welches es einem Nutzer ermöglicht, die Frequenz $f_M$ des Messsignals $U_M$ zu ändern.

**Claims**

1.  Method for detecting objects (12) enclosed in a medium (10), in which at least one transmit coil (14) and at least one receive conductor loop system (16), which are inductively coupled to one another, are used to generate a measurement signal (18) that allows information to be obtained about the orientation of the enclosed object (12), wherein the signal strength $U_M$ of the detected measurement signal (18) is taken as a basis for changing the frequency $f_M$ of the measurement signal, **characterized in that** the signal actuating the transmit coil (14) is indirectly or directly taken from a digital frequency generator with pulse width modulation, the duty ratio of which is changed on the basis of the signal strength $U_M$ of the detected measurement signal (18).

2.  Method according to Claim 1, **characterized in that** there is provision for at least one first threshold value $U_M$ (threshold 1) for the detected measurement signal $U_M$ (actual), which, when exceeded, results in the frequency $f_M$ of the measurement signal $U_M$ (actual) being changed.

3.  Method according to Claim 2, **characterized in that** there is provision for at least one second threshold value $U_M$ (threshold 2) for the detected measurement signal $U_M$ (actual), which, when undershot, results in the frequency $f_M$ of the measurement signal $U_M$ (actual) being changed.

4.  Method according to Claim 2 or 3, **characterized in that** the frequency change $\Delta f_M$ in the frequency $f_M$ of the measurement signal $U_M$ (actual) is effected in discrete steps.

5.  Method according to Claim 2 or 3, **characterized in that** the frequency $f_{M1}$ of the measurement signal is raised $f_{M2} = f_{M1} + \Delta f_M$ when the first threshold value $U_M$ (threshold 1) is exceeded.

6.  Method according to Claim 3 or 5, **characterized in that** the frequency $f_{M2}$ of the measurement signal is lowered $f_{M1} = f_{M2} - \Delta f_M$ when the second threshold value $U_M$ (threshold 2) is undershot.

7.  Measuring instrument, in particular a handheld positioning device (24, 124), for performing the method according to one of Claims 1 to 6, in which at least one transmit coil (14) and at least one receive conductor loop system (16), which are inductively coupled to one another, can be used to generate a measurement signal (18) that allows information to be obtained about the orientation of the enclosed object (12), wherein the measuring instrument (24, 124) has circuit means (260) that allow the frequency $f_M$ of the measurement signal $U_M$ (actual) to be changed, **characterized by** a digital frequency generator with pulse width modulation that is configured to indirectly or directly generate a signal actuating the transmit coil (14), and the duty ratio of which is changeable on the basis of the signal strength $U_M$ of the detected measurement signal (18).

8.  Measuring instrument according to Claim 7, **characterized in that** the measuring instrument (24, 124) has control means (254) that change the frequency $f_M$ of the measurement signal $U_M$ (actual) if the signal strength of the measurement signal (18) exceeds or undershoots a threshold value ($U_M$ (threshold 1), $U_M$ (threshold 2)).

9.  Measuring instrument according to Claim 7, **characterized in that** there is at least one operator control element (156) present that allows a user to change the frequency $f_M$ of the measurement signal $U_M$.

**Revendications**

1.  Procédé pour la détection d'objets (12) enfermés dans un support (10), avec lequel, via au moins une bobine d'émission (14) et au moins un système de boucle de conducteur de réception (16) couplés de façon inductive l'un à l'autre, un signal de mesure (18) est généré, lequel permet l'obtention d'informations sur la position de l'objet (12) enfermé, dans lequel, en fonction de l'intensité de signal $U_M$ du signal de mesure (18) détecté, la fréquence $f_M$ du signal de mesure est modifiée, **caractérisé en ce que** le signal commandant la bobine d'émission (14) est déduit indirectement ou directement d'un générateur de fréquence numérique avec modulation des impulsions en largeur dont le rapport cyclique est modifié en fonction de l'intensité de signal $U_M$ du signal de mesure (18) détecté.

2. Procédé selon la revendication 1, **caractérisé en ce qu'**au moins une première valeur de seuil $U_M$ (Schwell 1) pour le signal de mesure $U_M$ détecté (Ist) est prévue, en cas de dépassement par le haut de laquelle la fréquence $f_M$ du signal de mesure $U_M$ (Ist) est modifiée.

3. Procédé selon la revendication 2, **caractérisé en ce qu'**au moins une deuxième valeur de seuil $U_M$ (Schwell 2) pour le signal de mesure détecté $U_M$ (Ist) est prévue, en cas de dépassement par le bas de laquelle la fréquence $f_M$ du signal de mesure $U_M$ (Ist) est modifiée.

4. Procédé selon la revendication 2 ou 3, **caractérisé en ce que** la modification de fréquence $\Delta f_M$ de la fréquence $f_M$ du signal de mesure $U_M$ (Ist) s'effectue par pas discrets.

5. Procédé selon la revendication 2 ou 3, **caractérisé en ce qu'**en cas de dépassement par le haut de la première valeur de seuil $U_M$ (Schwell 1), la fréquence $f_{M1}$ du signal de mesure est augmentée

$$f_{M2} = f_{M1} + \Delta f_M.$$

6. Procédé selon la revendication 3 ou 5, **caractérisé en ce qu'**en cas de dépassement par le bas de la deuxième valeur de seuil $U_M$ (Schwell 2), la fréquence $f_{M2}$ du signal de mesure est abaissée

$$f_{M1} = f_{M2} - \Delta f_M.$$

7. Appareil de mesure, en particulier appareil de localisation portable (24, 124), pour la mise en oeuvre du procédé selon l'une des revendications 1 à 6, dans lequel, via au moins une bobine d'émission (14) et au moins un système de boucle de conducteur de réception (16) couplés de façon inductive l'un à l'autre, un signal de mesure (18) peut être généré, lequel permet l'obtention d'informations sur la position de l'objet (12) enfermé, l'appareil de mesure (24, 124) disposant de moyens de commutation (260) qui permettent de modifier la fréquence $f_M$ du signal de mesure $U_M$ (Ist), **caractérisé par** un générateur de fréquence numérique avec modulation des impulsions en largeur, lequel est conçu pour générer indirectement ou directement un signal commandant la bobine d'émission (14), et dont le rapport cyclique peut être modifié en fonction de l'intensité de signal $U_M$ du signal de mesure (18) détecté.

8. Appareil de mesure selon la revendication 7, **caractérisé en ce que** l'appareil de mesure (24, 124) dispose de moyens de commande (254) qui modifient la fréquence $f_M$ du signal de mesure $U_M$ (Ist) lorsque l'intensité de signal du signal de mesure (18) dépasse par le haut ou le bas une valeur de seuil ($U_M$(Schwell1), $U_M$ (Schwell2)).

9. Appareil de mesure selon la revendication 7, **caractérisé en ce qu'**au moins un élément de réglage (156) est présent, lequel permet à un utilisateur de modifier la fréquence $f_M$ du signal de mesure $U_M$.

EP 1 853 941 B1

Fig. 1

# Fig. 2b

# Fig. 2a

Fig. 3

# Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0509408 A1